(19) Europäisches Patentamt
European Patent Office
Office européen des brevets

(11) **EP 3 926 601 A1**

(12) # EUROPEAN PATENT APPLICATION
published in accordance with Art. 153(4) EPC

(43) Date of publication:
**22.12.2021 Bulletin 2021/51**

(21) Application number: **20913070.7**

(22) Date of filing: **25.11.2020**

(51) Int Cl.:
**G08G 1/01** *(2006.01)*    **G08G 1/0968** *(2006.01)*

(86) International application number:
**PCT/CN2020/131304**

(87) International publication number:
**WO 2021/218131 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2020 CN 202010338696**

(71) Applicant: **Baidu Online Network Technology (Beijing) Co., Ltd.**
**Beijing 100085 (CN)**

(72) Inventors:
• **HUANG, Jizhou**
  **Beijing 100085 (CN)**
• **ZHANG, Hao**
  **Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **ROUTE PLANNING METHOD AND DEVICE, APPARATUS, AND COMPUTER STORAGE MEDIUM**

(57)    The present disclosure provides a route planning method, apparatus, device and computer storage medium and relates to the technical field of big data. A specific implementation solution is: obtaining real-time traffic flow feature data of a road network; predicting state change risks of the road segments in the road network with the real-time traffic flow feature data of the road network to obtain state change risk information of the road segments; performing route planning with the state change risk information of the road segments. In the present disclosure, considerations of state change risks of road segments are integrated into the route planning so that the route is planned by globally considering the state change risks that the user might face upon passing by the road segments, thereby improving the quality of the planned route and the user's experience.

FIG.2

**EP 3 926 601 A1**

## Description

The present disclosure claims priority to the Chinese patent application No. 2020103386964 entitled "Route Planning Method, Apparatus, Device and Computer Storage Medium" filed on the filing date April 26, 2020, the entire disclosure of which is hereby incorporated by reference in its entirety.

### Field of the Disclosure

The present disclosure relates to the technical field of computer application, and particularly to the technical field of big data.

### Background of the Disclosure

Route planning has already been widely applied to a map-like application including a navigation function, and can provide a user with rich display results of information such as route recommendation, congestion conditions and predicted arrival time. However, since real road traffic conditions change very fast, a conventional navigation system can only provide the user with a route plan according to a current quasi-real-time state. In actual navigation process, the planned route might include high-risk road segments with large possibility of congestion and high accident probability, so that the user cannot reach the destination at the planned time. As for some scenarios having very strict requirements for time, such as business meetings, picking up and seeing off friends and taking airplanes, if such risk happens, the user cannot arrive at the destination as expected. This causes the user problems such as low quality of the planned route and undesirable user experience.

### Summary of the Disclosure

In view of the above, the present disclosure provides a route planning method, apparatus, device and computer storage medium to facilitate improving the quality of the planned route and the user's experience.

In a first aspect, the present disclosure provides a method for route planning, the method including:
According to a first aspect, the present disclosure provides a method for route planning, comprising:

    obtaining real-time traffic flow feature data of a road network;
    predicting state change risks of the road segments in the road network with the real-time traffic flow feature data of the road network to obtain state change risk information of the road segments;
    performing route planning with the state change risk information of the road segments.

According to a second aspect, the present disclosure provides an apparatus for route planning, including:

    a data obtaining unit configured to obtain real-time traffic flow feature data of a road network;
    a risk predicting unit configured to predict state change risks of the road segments in the road network with the real-time traffic flow feature data of the road network to obtain state change risk information of the road segments;
    a route planning unit configured to perform route planning with the state change risk information of the road segments.

According to a third aspect, the present disclosure provides an electronic device, including:

    at least one processor; and
    a memory communicatively connected with the at least one processor; wherein,
    the memory stores instructions executable by the at least one processor, and the instructions are executed by the at least one processor to enable the at least one processor to execute the method according to the first aspect.

According to a fourth aspect, the present disclosure provides a non-transitory computer-readable storage medium storing computer instructions therein, wherein the computer instructions are used to cause the computer to execute the method according to the first aspect.

Through the above technical solutions of the present disclosure, considerations of state change risks of road segments are integrated into the route planning so that the route is planned by globally considering the state change risks that the user might face upon passing by the road segments, thereby improving the quality of the planned route and the user's experience.

It will be appreciated that the Summary part does not intend to indicate essential or important features of embodiments of the present disclosure or to limit the scope of the present disclosure. Other features of the present disclosure will be made apparent by the following description.

## Brief Description of Drawings

The figures are intended to facilitate understanding the solutions, not to limit the present disclosure. In the figures,

FIG. 1 illustrates an exemplary system architecture to which embodiments of the present disclosure may be applied;
FIG. 2 illustrates a flow chart of a method according to an embodiment of the present disclosure;
FIG. 3 illustrates a structural schematic diagram of a congested state predicting model according to an embodiment of the present disclosure;
FIG. 4 illustrates a structural schematic diagram of an accident predicting model according to an embodiment of the present disclosure;
FIG. 5 illustrates a diagram of an example of a recommended route displaying interface according to an embodiment of the present disclosure;
FIG. 6 illustrates a structural schematic diagram of an apparatus according to an embodiment of the present disclosure;
FIG. 7 illustrates a block diagram of an electronic device for implementing a method for route planning according to embodiments of the present disclosure.

## Detailed Description of Preferred Embodiments

Exemplary embodiments of the present disclosure are described below with reference to the accompanying drawings, include various details of the embodiments of the present disclosure to facilitate understanding, and should be considered as being only exemplary. Therefore, those having ordinary skill in the art should recognize that various changes and modifications can be made to the embodiments described herein without departing from the scope and spirit of the application. Also, for the sake of clarity and conciseness, depictions of well-known functions and structures are omitted in the following description.

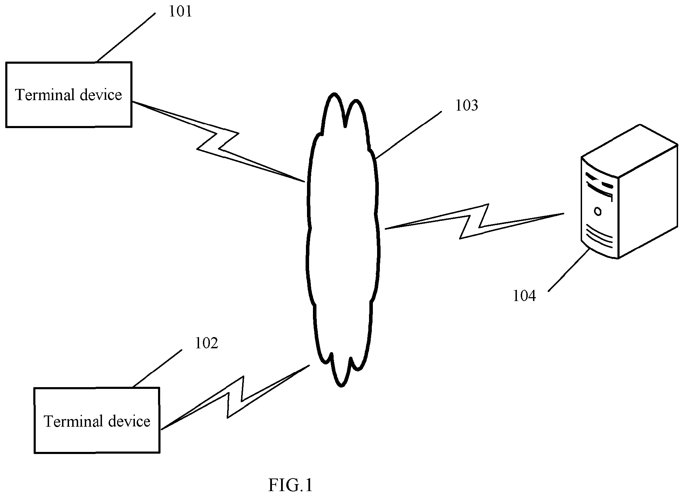

FIG. 1 illustrates an exemplary system architecture to which embodiments of the present disclosure may be applied. As shown in FIG. 1, the system architecture may comprise terminal devices 101 and 102, a network 103 and a server 104. The network 103 is used to provide a medium for a communication link between the terminal devices 101, 102 and the server 104. The network 103 may comprise various connection types such as wired, wireless communication links, or an optical fiber cable.

The user may use the terminal devices 101 and 102 to interact with the server 104 via the network 103. The terminal devices 101 and 102 may have various applications installed thereon, such as map-like applications, speech interaction type applications, webpage browser applications, communication-type applications, etc.

The terminal devices 101 and 102 may be various electronic devices capable of supporting and displaying a map-like application, and include but not limited to smart phones, tablet computers, smart wearable devices etc. The apparatus according to the present disclosure may be disposed in or run in the server 104. The apparatus may be implemented as a plurality of software or software modules (e.g., for providing distributed service) or as a single software or software module, which will not be limited in detail herein.

For example, the apparatus for route planning is disposed in and runs in the server 104, and the server 104 may collect and maintain, in advance, user trajectory data uploaded by the terminal devices (including 101 and 102) during use of the map-like application and traffic flow data uploaded by various traffic sensors, and these data may constitute traffic flow feature data of a road network. The apparatus for route planning performs route planning in a manner provided by embodiments of the present disclosure. When the user of the terminal devices 101 or 102 needs to plan a route while using the map-like application, the apparatus for route planning disposed in and running in the server 104 may perform route planning, and a route planning result may be returned to the terminal device 101 or 102.

The server 104 may be a single server or a server group consisting of a plurality of servers. It should be appreciated that the number of the terminal devices, networks and servers in FIG. 1 is only for illustration purpose. Any number of terminal devices, networks and servers are feasible according to the needs in implementations.

A core idea of the present disclosure lies in that considerations of state change risks of road segments are integrated into the route planning so that the route is planned by globally considering the state change risks that the user might face upon passing by the road segments, thereby improving the quality of the planned route and the user's experience. The method and apparatus according to the present disclosure will be described in detail in conjunction with embodiments.

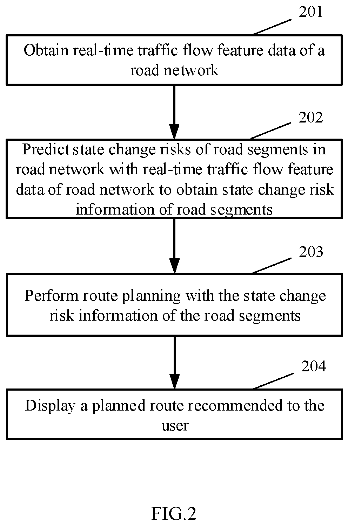

FIG. 2 illustrates a flow chart of a method according to an embodiment of the present disclosure. As shown in FIG. 2, the method may include the following steps:

At 201, real-time traffic flow feature data of a road network is obtained.

In embodiments of the present disclosure, with a time slice with a preset time duration being taken as a cycle, the real-time traffic flow feature data of the road network at the current time slice to facilitate determining a state change risk coefficient of each road segment and thereby performing route planning in subsequent steps. For example, a time slice of five minutes is taken as an example, and the real-time traffic flow feature data of the road network is obtained every 5 minutes.

The obtained traffic flow feature data may include one of or any combination of traffic flow statistics data, speed data and times of sudden deceleration on the road segments. The traffic flow statistics data is mainly with respect to statistics of the vehicle flow. The speed data may include at least one of for example an average speed, a speed median, a maximum speed and a minimum speed. The times of sudden deceleration may be times of sudden deceleration when the vehicle is traveling on the road segment, and the so-called sudden deceleration may mean that an amplitude of reduction of the speed per unit of time exceeds a preset threshold.

At 202, state change risks of the road segments in the road network are predicted with the real-time traffic flow feature data of the road network to obtain state change risk information of respective road segments.

The prediction of the state change risks of the road segments in the present disclosure may include at least one of congested state change prediction, accident occurrence prediction, passability prediction, traffic rule change prediction and road quality deterioration prediction. The various predictions will be described in detail below.

1) Congested state change prediction

The congested state change prediction may be performed with a congested state predicting model in the present disclosure. The congested state predicting model can output future predicted passage durations of respective road segments in a case where the real-time traffic flow feature data of the current road network, road attribute feature data and future environment feature data are input into the model.

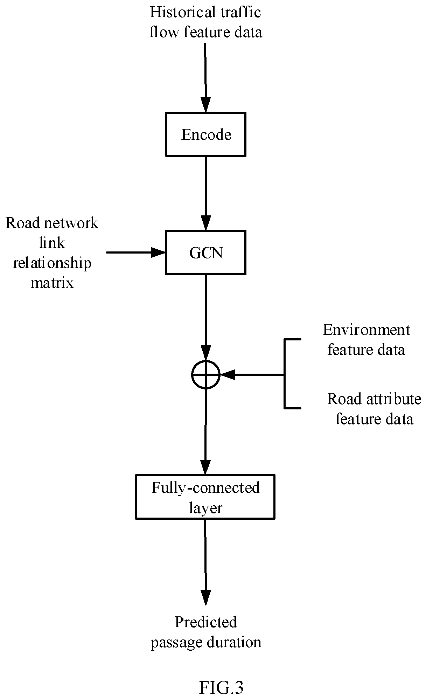

To facilitate understanding, a training process of the congested state predicting model is described first. As shown in FIG. 3, the congested state predicting model in the present disclosure mainly includes a GCN (Graph Convolutional Network) and a fully-connected layer.

First, training data is obtained. The training data may be obtained from historical information of the road segments in the road network. The first piece of training data may include four data: traffic flow feature data of the road segment in a first historical time slice, road attribute feature data, environment feature data in a second historical time slice and an average passage duration. The second time slice is a future time slice relative to the first time slice. For example, the second time slice may be No. 1 time slice, No. 2 time slice, No. 3 time slice or No. 4 time slice after the first time slice. It needs to be appreciated that terms such as "first" and "second" used in embodiments of the present disclosure are only intended to distinguish two time slices in terminology and not intended to limit meanings such as order, number and importance degree.

A time slice of five minutes is taken as an example. If the second time slice is No. 1 time slice after the first time slice, the congested state predicting model trained with the training data is used to predict the congested state change risk in five minutes. If the second time slice is No. 2 time slice after the first time slice, the congested state predicting model trained with the training data is used to predict the congested state change risk in 10 minutes. In a similar way, a plurality of congested state predicting models may be built respectively to predict the congested state change risks of the road segment in different future time slices.

The traffic flow feature data in the first time slice may include the traffic flow statistics data, speed data and times of sudden deceleration of the road segment in the time slice. The road attribute feature data may include information such as a length and a road class of the road segment. The environment feature data in the second time slice may include information such as weather, time, whether the day is holiday or festival, and season in the second time slice on the road segment. To facilitate calculation, these feature data may be represented in the form of discrete values.

As shown in FIG. 3, the traffic flow feature data of the road segment in the first historic time slice are encoded. To fit an association relationship between different road segments, the association relationship may be built using the GCN, and vector representations obtained from the encoding and a road network link relationship are input to the GCN. The vector representations output by the GCN may be concatenated with the road attribute feature data and the environment feature data in the second historical time slice and then input to the fully-connected layer. The fully-connected layer obtains the predicted passage duration on the road segment in the second historical time slice.

The GCN and the fully-connected layer are trained until a training target is achieved. The training target is to minimize a difference between the predicted passage duration on the road segment and an average passage duration on the road segment in the training data, that is to say, minimize a prediction error.

After completion of training, when the trained congested state predicting model is used to predict in a future time slice, as shown in FIG. 3 the real-time traffic flow feature data of the road segments in the road network in the current time slice are encoded, and then the vector representations obtained after encoding and the road network link relationship matrix are input to the GCN. The vector representations output by the GCN are concatenated with the road attribute feature data and the environment feature data in a future time slice and then input to the fully-connected layer. The fully-connected layer obtains the predicted passage duration on the road segment in the future time slice.

The congested state changes of the road segments in the future time slice can be determined according to the predicted passage durations of the road segments in the future time slice. For example, if the predicted passage duration is longer than the historical average passage duration in the same period, and the amplitude of the increase exceeds a preset amplitude threshold, it may be believed that the congestion happens. Different amplitude thresholds may be set to distinguish congestion of different degrees.

2) Accident occurrence prediction

In the present disclosure, whether an accident occurs may be predicted using an accident predicting model. The accident predicting model can output a prediction of whether an accident occurs on the road segments in the future time slice in a case where the traffic flow feature data of the road network in the current time slice, the road attribute feature data and the environment feature data in the future time slice are input to the accident predicting model.

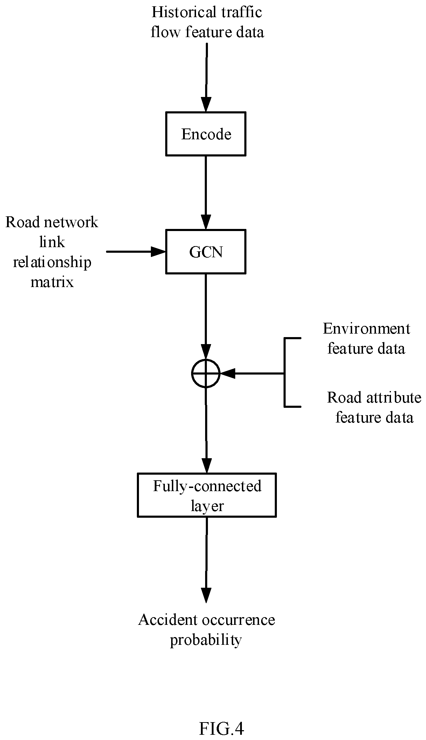

To facilitate understanding, a training process of the accident predicting model is described first. As shown in FIG. 4, similar to the congested state predicting model, the accident predicting model mainly includes the GCN and the fully-connected layer.

First, training data is obtained. The training data may be obtained from historical information of the road segments in the road network. The first piece of training data may include four data: traffic flow feature data of the road segment in a first historical time slice, road attribute feature data, environment feature data in a second historical time slice and information about whether an accident occurs on the road segment in the second historical time slice. The second time slice is a future time slice relative to the first time slice.

The traffic flow feature data in the first historical time slice may include the traffic flow statistics data, speed data and times of sudden deceleration of the road segment in the first historical time slice. The road attribute feature data may include information such as a length and a road class of the road segment. The environment feature data may include information such as weather, time, whether the day is holiday or festival, and season in the second historical time slice on the road segment. To facilitate calculation, these feature data may be represented in the form of discrete values.

As shown in FIG. 4, the traffic flow feature data of the road segment in the first historic time slice are encoded. To fit an association relationship between different road segments, the association relationship may be built using the GCN, and vector representations obtained from the encoding and a road network link relationship are input to the GCN. The vector representations output by the GCN may be concatenated with the road attribute feature data and the environment feature data in the second historical time slice and then input to the fully-connected layer. The fully-connected layer obtains a prediction of whether an accident occurs on the road segment in the second time slice. The fully-connected layer may specifically output a probability that an accident occurs on the road segment, and determines whether the accident occurs according to whether the probability is higher than the preset probability threshold. If the probability is higher than the preset probability threshold, it is determined that the accident occurs.

The GCN and the fully-connected layer are trained until a training target is achieved. The training target is to make a prediction result about whether an accident occurs on the road segments consistent with the training data, that is, to minimize a prediction error.

After completion of training, when the trained accident predicting model is used for prediction, as shown in FIG. 4 the real-time traffic flow feature data of the road segments in the road network in the current time slice are encoded, and then the vector representations obtained after encoding and the road network link relationship matrix are input to the GCN. The vector representations output by the GCN are concatenated with the road attribute feature data and the environment feature data in a future time slice and then input to the fully-connected layer. The fully-connected layer obtains a prediction of whether an accident occurs on the road segment in the future time slice. Specifically, the fully-connected layer may output a probability that an accident occurs on the road segment, and determines whether the accident occurs according to whether the probability is higher than the preset probability threshold. If the probability is higher than the preset probability threshold, it is determined that the accident occurs.

3) Passability prediction

The passabiliy prediction in the present application means predicting whether road segment is passable, rather than being blocked by various factors. The factors for making the road segment impassable, i.e., blocked, may be road repair, road shutdown and other engineering. The present disclosure does not limit this.

Since the blocking of the road segment is an event that happens independently and not directly associated with other segments in the road network, the GCN is not used for prediction, and instead a classifier is directly used for model building and prediction.

When prediction is performed, current flow features of the road segments are obtained. The flow features may include a traffic flow of the road segment, a traffic flow of a preceding road segment and a traffic flow of a following road segment. The traffic flow mainly refers to a vehicle flow. Regarding a road segment, its preceding road segment might include a plurality of road segments, and the following road segment might include a plurality of road segments. The traffic flow of the preceding road segment may be an average traffic flow of the plurality of preceding road segments. Likewise, the traffic flow of the following road segments might be an average traffic flow of the plurality of following road segments.

Then, a historical flow feature of each road segment is obtained. The historical flow feature may be a historical flow feature in the same time slice as the current time. For example, assuming that the current time is 10:01, the flow feature data in the historical 10:00~10:05 time slices might be obtained. The historical flow feature may also be an average flow feature in a certain historical time interval, for example, an average flow feature in one week, one month or the like before yesterday.

The feature obtained after differentiating the current flow feature and historical flow feature on the same road segment and the road attribute feature are input to the passability predicting model to obtain a prediction of whether the road segment is passable. The passability predicting model may be obtained by pre-training based on a classifier, wherein the classifier may be a binary classifier such as SVM (Support Vector Machine). What is supported by the classifier is a probability that the road segment is impassable, and whether the road segment is impassable is determined according to the probability. If the probability that the road segment is impassable is higher than a preset probability threshold, it is determined that the road segment is impassable.

When the passability predicting model is trained, the flow feature in the time slice when the road segment is passable and the historical flow feature in the time slice may be obtained, and the traffic high flow in the time slice when the road segment is impassable and the historical flow feature in the time slice may be obtained, as training data. The feature obtained by differentiating two flow features in the same training data and the road attribute feature of the same road segment are input to the classifier, and the classifier outputs a classification result of whether the road segment is passable. The classifier is trained until the training target is achieved. The training target is that the classification result of the classifier is consistent with the information about whether the road segment is passable in the training data.

4) Traffic rule change prediction

In some cases, a traffic rule change will cause the user to face some passage risks when he drives on the route. The traffic rule change involved in the present disclosure mainly includes no turn, for example, no straight drive, no left turn, no right turn, no U-turn etc. In the present disclosure, whether a traffic rule change occurs on the road segment may be mined by observing a difference of trajectories of the road segment.

Specifically, it is feasible to obtain a current traffic flow proportion from the preceding road segment on each road segment and a historical flow proportion from the preceding road segment on each road segment. If the current traffic flow proportion of the road segment falls by a degree beyond a preset proportion threshold as compared with the historical flow proportion, it is predicted that a traffic rule change exists on the road segment.

For example, assuming that the user passes by road segment B via road segment A, road segment A is a preceding road segment of road segment B. Determination is made as to a proportion of the traffic flow from road segment A in the traffic flow of the road segment B. if the proportion significantly falls as compared with the historical flow proportion, it is predicted that the traffic rule change occurs in the road segment B. The historical flow proportion may also be an average flow proportion in a certain historical time interval, for example, an average flow proportion in one week, one month or the like before yesterday.

In addition, in addition to the manner of comparing the current traffic flow proportion with the historical flow proportion, an absolute value of the traffic flow of the road segment may be further taken into consideration, i.e., it is predicted that the traffic rule change exists on the road segment when the following condition is also satisfied: the current traffic flow of the road segment falls by a degree beyond a preset threshold as compared with the historical flow.

5) Road quality deterioration prediction

The road quality deterioration prediction mainly predicts whether the road quality of the road segment becomes worse than before. Factors causing the road quality deterioration may be for example the bumpy road surface due to damages to the road, pedestrian's random crossing, parking violation, slope changes, new obstacles and so on, and will not be limited in the present disclosure.

When performing road quality deterioration prediction, current speed data and times of sudden deceleration of the road segments may be obtained, wherein the speed data may include for example a median value of a trajectory point speed and an average value.

Furthermore, historical speed data and historical times of sudden deceleration of the road segments are also obtained. If the current speed data of the road segments obviously falls as compared with the historical speed data, e.g., if the fall of the speed exceeds a preset speed threshold and when the current times of sudden deceleration obviously rise as compared with the historical times of sudden deceleration, e.g., the rise exceeds a preset times threshold, it is predicted that road quality deterioration occurs on the road segment.

The historical speed data may be historical speed data belonging to the same time slice as the current time. For example, if the current time is 10:01, the historical speed data in the historical 10:00~10:05 time slices might be obtained. The historical speed data may also be average speed data in a certain historical time interval, for example, average speed data in one week, one month or the like before yesterday.

After the various prediction results are obtained, risk coefficients corresponding to various predictions on the road segment are respectively obtained according to various prediction results; then, a weight process is performed for the risk coefficients corresponding to the obtained various predictions for the road segment, to obtain state change risk coefficients of the road segments.

For example, a congested state change risk coefficient $R_1$ of road segment i is determined according to the predicted passage duration of the road segment i according to the congested state change. The larger a difference between the predicted passage duration and the historical average passage duration is, the larger the value of $R_1$ is.

An accident occurrence risk coefficient $R_2$ of road segment i is determined according to whether an accident occurs on the road segment i as predicted by accident occurrence prediction. For example, if it is predicted that the accident occurs on the road segment I, $R_2$ may be determined according to the predicted probability that the accident occurs on the road segment i. The larger the value of the probability is, the larger $R_2$ is. It is also feasible to simply set the value of $R_2$ to 1 when the accident occurs, and to 0 when the accident does not occur.

A passability risk coefficient $R_3$ of the road segment i is determined according to whether the road segment i passable as predicted by the passability prediction. For example, if it is predicted that the road segment is impassable, $R_3$ may be determined according to the predicted probability that the road segment is impassable. The larger the value of the probability is, the larger the value of $R_3$ is. It is also feasible to simply set the value of $R_3$ to 1 when the road segment is impassable and to 0 when the road segment is passable.

A traffic rule change risk coefficient $R_4$ of the road segment i is determined according to whether a traffic rule change occurs on the road segment i as predicted by the traffic rule change prediction. For example, if it is predicted that the traffic rule change occurs on the road segment, $R_4$ may be determined according to a degree of the fall of the flow proportion. The larger the degree of the fall is, the larger the value of $R_4$ is. It is also feasible to simply set the value of $R_4$ to 1 when the traffic rule change occurs and to 0 when the traffic rule change does not occur.

A passability risk coefficient $R_5$ of the road segment i is determined according to whether the road quality deterioration is suspected on the road segment i as predicted by the road quality deterioration prediction. For example, if it is predicted that the road quality deterioration occurs on the road segment, $R_5$ may be determined according to a degree of fall of the speed and/or a degree of rise of the times of sudden deceleration. The larger the degree of fall of the speed is, the larger the value of $R_5$ is; the larger the degree of rise of the times of sudden deceleration is, the larger the value of $R_5$ is. It is also feasible to simply set the value of $R_5$ to 1 when the road quality deterioration occurs on the road segment and to 0 when the road quality deterioration does not occur on the road segment.

Then, the state change risk coefficient $R_{all}$ of the road segment i is determined through the following equation:

$$\lambda_1 * R_1 + \lambda_2 * R_2 + \lambda_3 * R_3 + \lambda_4 * R_4 + \lambda_5 * R_5 = R_{all}$$

The above weighting coefficients $\lambda_1, \lambda_2, \lambda_3, \lambda_4$ and $\lambda_5$ may employ a manually-set empirical value or experimental value.

The state change risk coefficients of respective road segments in the road network may be determined in a similar manner.

At 203, route planning is performed using the state change risk information of the road segments.

In a route planning product, a mesh-like topological diagram is built from all road segments on the road network according to a mutual communication relationship. Nodes in the topological diagram are crossings and edges are road segments. In the prior art, a weight is assigned for each edge on the diagram according to static road network attributes and real-time road condition information. That is to say, a weight is assigned for each road segment. When the user inputs a starting position and a finishing position to perform route planning, lookup and calculation of the routes will be performed by searching the diagram. During the lookup of the routes, a road segment with a high weight is preferably selected from several optional road segments. The candidate routes obtained by looking up are sorted according to any one of or any combination of a plurality of dimensions such as a passage duration, a distance, the number of traffic lights and a road class, and a route recommended to the user is finally determined.

In the present disclosure, it is feasible to fuse the state change risk information of the road segment into the process of looking up routes, or fuse the state change risk information of the road segment into the process of sorting the candidate routes, or fuse the state change information of the road segment into in the process of looking up routes and sorting the candidate routes.

The following processing may be performed upon fusing the state change risk information of the road segment into the process of looking up routes:

S11: updating the weights of the road segments by using the state change risk information of the road segments, wherein the higher the state change risk is, the larger a degree of reduction of the weight of the road segment is.

That is to say, regarding a road segment having the state change risk, conditions of its state change risk are used to "suppress" the weight of the road segment.

For example, the updated weight $weight_{i\_new}$ of the road segment is:

$$\lambda_{all} * R_{all} + weight_i = weight_{i\_new}$$

where $weight_i$ is the original weight of the road segment, and $\lambda_{all}$ is a weighting coefficient which usually may be set to a negative value. The specific value may be manually set to an empirical value or experimental value.

S12: performing route lookup for the user-input starting position and finishing position based on the updated weights of the road segments, to obtain at least one candidate route.

In the process of looking up routes, estimated time for reaching the road segments is determined, and then the state change risk of the road segment in the time slice where the estimated time lies is estimated using the estimated time. The estimated time for reaching the road segments may be specifically determined by superimposing estimated durations of passing through the road segments. Such content will not be detailed any more here. Then, a route recommended to the user is determined from the candidate route.

S13: determining a route recommended to the user from the candidate route.

A conventional sorting manner in the prior art may be employed to sort the candidate routes according to any one of or any combination of a plurality of dimensions such as a passage duration, a distance, the number of traffic lights and a road class, and the route recommended to the user may be finally determined.

The following processing may be performed upon fusing the state change risk information of the road segment into the process of sorting the candidate routes:

S21: perform route lookup for the user-input starting position and finishing position to obtain at least one candidate route.

A route lookup manner in the prior art may be employed herein without considering the impact exerted by the state change risk of the road segments on the weights of the road segments.

S22: sorting the candidate routes by fusing the state change risk information of the road segments in the candidate routes.

In the step, it is possible to determine the state change risk coefficients of the candidate routers using the state change risk coefficients of the road segments included in the candidate routes, for example, sum or average the state change risk coefficients of the road segments included in the candidate routes. Then, it is feasible to, on the basis of considering the state change risk coefficients of the routes, sort the candidate routes by further considering any one of or any combination of a plurality of dimensions such as a passage duration, a distance, the number of traffic lights and a road class.

It is also feasible to train a sorting model based on the user's behavior of selecting the recommended route, and features such as the state change risk features of the candidate routes, the road class, the passage duration, the distance, the number of traffic lights and vehicle flow information, and then sort the recommended routes using the trained sorting model.

S23: determining a route to be recommended to the user according to a sorting result.

After the sorting, top N routes may be selected and recommended to the user, with N being a preset positive integer. The first route sorted with different sorting policies may also be recommended to the user, and so on.

At 204, a planned route recommended to the user is displayed.

This step may employ any one or any combination of the following manners:

Manner 1: regarding a route with the lowest sum of state change risk coefficients of the road segments included in the planned route recommended to the user, display information indicating that the risk of the route is the lowest.

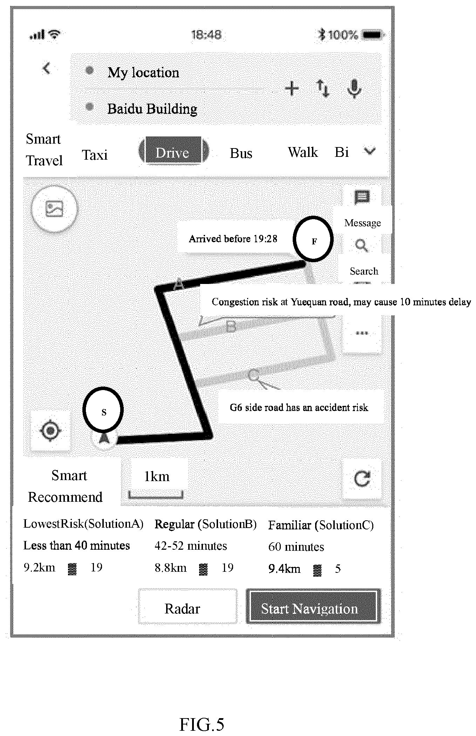

As shown in FIG. 5, the route indicated by solution A can display a label "lowest risk" to facilitate selection by the user.

Manner 2: regarding a road segment whose state change risk satisfies a preset condition in the routes recommended to the user, display the state change risk information predicted for the road segment.

As shown in FIG. 5, in the recommended route B displayed on the current interface, there is a road segment "Yuequan Road" with a high congestion risk, so the information that "A congestion risk at Yuequan Road, may cause 10 minutes delay" may be indicated in the road segment. There is a road segment "G6 side road" having an accident risk in the recommended route C, so the information that "G6 side road has an accident risk" may be indicated in the road segment. As such, the user can clearly learn about risks that might exist in the recommended routes, so that the above information prompting the road segments with risks and risk types is displayed, to assist the user in selecting the route, or changing the future travel plan accordingly.

Manner 3: regarding a route not recommended to the user due to the state change risk, display causal information why the route is not recommended to the user.

When some routes are not recommended due to high risks, the cause may be prompted to the user, e.g., "the route passing through Zhongshan Road has already been successfully avoided for you due to a high accident risk".

In addition, if the planned route recommended to the user includes a road segment with a congested state change risk, a second estimated arrival time of the route may be determined using a predicted passage duration of the road segment including the congested state change risk; an interval of the estimated arrival time of the road segment is displayed using a first estimated arrival time determined when the congested state change risk is not considered, and the second estimated arrival time.

As shown in FIG. 5, since the recommended route corresponding to solution B includes Yuequan Road with the congested state change risk, a congested state predicting model is used to predict the passage duration on Yuequan Road to obtain that the second estimated arrival time of the recommended route corresponding to the solution B is 52 minutes. If the congestion risk is not considered, the first estimated arrival time of the recommended route as calculated in a conventional manner is 42 minutes. Therefore, the displayed interval of the estimated arrival time is "42-52 minutes".

A specific form of displaying the information is not limited herein. The displaying manner shown in FIG. 5 is only an example listed in the present disclosure.

The method according to the present disclosure is described in detail above. An apparatus according to the present disclosure will be described below in detail in conjunction with embodiments.

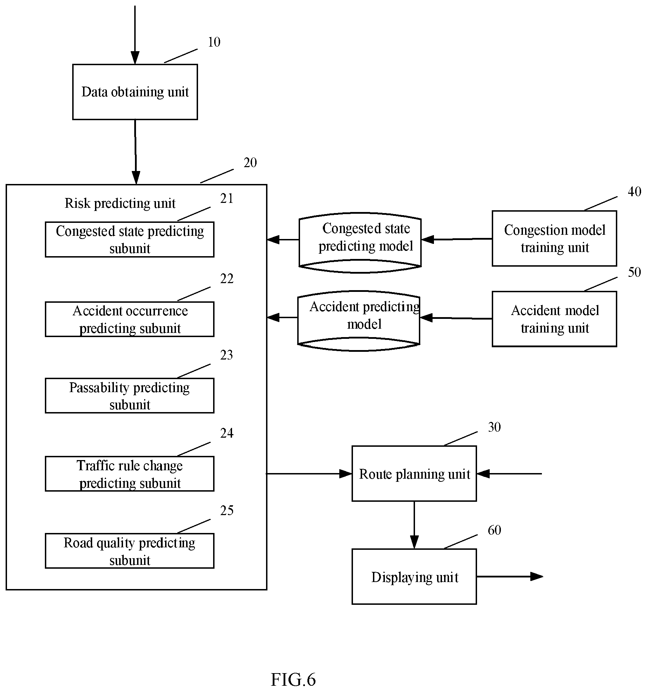

FIG. 6 illustrates a structural schematic diagram of an apparatus according to an embodiment of the present disclosure. The apparatus may be an application located at a server end, or may also be a functional unit such as a plug-in or Software Development Kit (SDK) located in the application of the server end. As shown in FIG. 6, the apparatus may comprise: a data obtaining unit 10, a risk predicting unit 20 and a route planning unit 30, and further comprise a congestion model training unit 40, an accident model training unit 50 and a displaying unit 60. Main functions of the units are as follows:

The data obtaining unit 10 is configured to obtain real-time traffic flow feature data of a road network.

The obtained traffic flow feature data may include one of or any combination of traffic flow statistics data, speed data and times of sudden deceleration on the road segments. The traffic flow statistics data is mainly with respect to statistics of the vehicle flow. The speed data may include at least one of for example an average speed, a speed median, a maximum speed and a minimum speed. The times of sudden deceleration may be times of sudden deceleration when the vehicle is traveling on the road segment, and the so-called sudden deceleration may mean that an amplitude of reduction of the speed per unit of time exceeds a preset threshold.

The risk predicting unit 20 is configured to predict state change risks of the road segments in the road network with the real-time traffic flow feature data of the road network to obtain state change risk information of respective road segments.

Specifically, the risk predicting unit 20 may perform at least one of congested state change prediction, accident occurrence prediction, passability prediction, traffic rule change prediction and road quality deterioration prediction respectively for the road segments using the real-time traffic flow feature data of the road network, and obtain risk coefficients corresponding to the predictions respectively according to various prediction results; and perform a weight process for the risk coefficients corresponding to the predictions obtained for the road segments, to obtain state change risk coefficients of the road segments.

The risk predicting unit 20 may comprise: a congested state predicting subunit 21, an accident occurrence predicting subunit 22, a passability predicting subunit 23, a traffic rule change predicting subunit 24 and a road quality predicting subunit 25.

The congested state predicting subunit 21 is configured to input the real-time traffic flow feature data of the road network corresponding to a current time slice, road attribute feature data and environment feature data corresponding to a future time slice into a pre-trained congested state predicting model, to obtain a predicted passage duration of each road segment in the road network in the future time slice; and determine a congested state change of each road segment in the future time slice according to the predicted passage duration of each road segment in the future time slice.

In this case, the congestion model training unit 40 may pre-train in the following manner to obtain the congested state predicting model:

obtain training data which includes traffic flow feature data of the road segments included in the road network in a first historical time slice, road attribute feature data, environment feature data in a second historical time slice and an average passage duration, wherein the second time slice is a future time slice relative to the first time slice; encode the traffic flow feature data of the road segments in the first historic time slice; input vector representations obtained from the encoding and a road network link relationship to a Graph Convolutional Network; concatenate the vector representations output by the Graph Convolutional Network with the road attribute feature data and the environment feature data in the second historical time slice and then input to a fully-connected layer, to obtain the predicted passage duration on the road segment in the second historical time slice;

train the Graph Convolutional Network and the fully-connected layer until a training target is achieved. The training target is to minimize a difference between the predicted passage duration on the road segment and an average passage duration on the road segment in the training data.

The accident occurrence predicting subunit 22 is configured to input the real-time traffic flow feature data of the road network corresponding to a current time slice, road attribute feature data and environment feature data corresponding to a future time slice into a pre-trained accident predicting model, to obtain a prediction of whether an accident occurs on the road segment in the future time slice.

In this case, the accident model training unit 50 is configured to pre-train in the following manner to obtain the accident predicting model:

obtain training data which includes traffic flow feature data of the road segments included in the road network in a first historical time slice, road attribute feature data, environment feature data in a second historical time slice and whether an accident occurs, wherein the second time slice is a future time slice relative to the first time slice; encode the traffic flow feature data of the road segments in the first historic time slice; input vector representations obtained from the encoding and a road network link relationship to a Graph Convolutional Network; input the vector representations output by the Graph Convolutional Network, the road attribute feature data and the environment feature data in the second historical time slice into a fully-connected layer, to obtain a prediction of whether an accident occurs on the road segment in the second time slice; train the Graph Convolutional Network and the fully-connected layer until a training target is achieved. The training target is to make a prediction result about whether an accident occurs on the road segments consistent with the training data.

The passability predicting subunit 23 is configured to obtain current flow features of the road segments, the flow features including a traffic flow of the road segment, a traffic flow of a preceding road segment and a traffic flow of a following road segment; obtain historical flow features of the road segments; input features obtained after differentiating the current flow features and historical flow features on the same road segment and the road attribute features into a passability predicting model to obtain a prediction of whether the road segment is passable, wherein the passability predicting model is obtained by pre-training based on a classifier.

The traffic rule change predicting subunit 24 is configured to obtain a current traffic flow proportion from the preceding road segment on each road segment and a historical flow proportion from the preceding road segment on each road segment. If the current traffic flow proportion of the road segment falls by a degree beyond a preset proportion threshold as compared with the historical flow proportion, predict that a traffic rule change exists on the road segment.

The road quality predicting subunit 25 is configured to obtain current speed data and times of sudden deceleration of the road segments, and obtain historical speed data and historical times of sudden deceleration of the road segments; if the current speed data of the road segments obviously falls by a degree beyond a preset speed threshold as compared with the historical speed data, and/or, if the current times of sudden deceleration rise by a degree beyond a preset times threshold as compared with the historical times of sudden deceleration, predict that road quality deterioration occurs on the road segment.

The route planning unit 30 is configured to perform route planning with the state change risk information of the road segments.

Specifically, the route planning unit 30 may update weights of the road segments using the state change risk information of the road segments, wherein the higher the state change risk is, the larger a degree of reduction of the weights of the road segments is; perform route lookup for the user-input starting position and finishing position based on the updated weights of the road segments, to obtain at least one candidate route; determine a route recommended to the user from the candidate route.

The route planning unit 30 may further perform route lookup for the user-input starting position and finishing position to obtain at least one candidate route; sort the candidate routes by fusing the state change risk information of the road segments in the candidate routes; determine a route recommended to the user according to a sorting result.

The displaying unit 60 is configured to display a route planning result in at least one of the following manners:

Manner 1: regarding a route with the lowest sum of state change risk coefficients of the road segments included in the planned route recommended to the user, display information indicating that the risk of the route is the lowest.

Manner 2: regarding a road segment whose state change risk satisfies a preset condition in the route recommended to the user, display the state change risk information predicted for the road segment.

Manner 3: regarding a route not recommended to the user due to the state change risk, display causal information why the route is not recommended to the user.

In addition, if the planned route recommended to the user includes a road segment with a congested state change risk, a second estimated arrival time of the route may be determined using a predicted passage duration of the road segment including the congested state change risk; an interval of the estimated arrival time of the road segment is displayed by the displaying unit 60 by using a first estimated arrival time determined when the congested state change risk is not considered, and the second estimated arrival time.

According to embodiments of the present disclosure, the present disclosure further provides an electronic device and a readable storage medium.

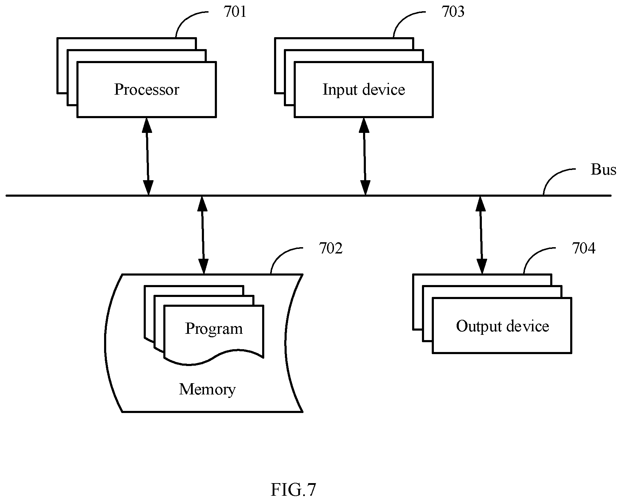

As shown in FIG. 7, it shows a block diagram of an electronic device for implementing a method for route planning according to embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 7, the electronic device comprises: one or more processors 701, a memory 702, and interfaces configured to connect components and including a high-speed interface and a low speed interface. Each of the components are interconnected using various buses, and may be mounted on a common motherboard or in other manners as appropriate. The processor can process instructions for execution within the electronic device, including instructions stored in the memory or on the storage device to display graphical information for a GUI on an external input/output device, such as a display device coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor 701 is taken as an example in FIG. 7.

The memory 702 is a non-transitory computer-readable storage medium provided by the present disclosure. The memory stores instructions executable by at least one processor, so that the at least one processor executes the method for route planning according to the present disclosure. The non-transitory computer-readable storage medium of the present disclosure stores computer instructions, which are used to cause a computer to execute the method for route planning according to the present disclosure.

The memory 702 is a non-transitory computer-readable storage medium and can be used to store non-transitory software programs, non-transitory computer executable programs and modules, such as program instructions/modules corresponding to the method for route planning in embodiments of the present disclosure. The processor 701 executes various functional applications and data processing of the server, i.e., implements the method for route planning in the above method embodiments, by running the non-transitory software programs, instructions and modules stored in the memory 702.

The memory 702 may include a storage program region and a storage data region, wherein the storage program region may store an operating system and an application program needed by at least one function; the storage data region may store data created according to the use of the electronic device. In addition, the memory 702 may include a high-speed random access memory, and may also include a non-transitory memory, such as at least one magnetic disk storage device, a flash memory device, or other non-transitory solid-state storage device. In some embodiments, the memory 702 may optionally include a memory remotely arranged relative to the processor 701, and these remote memories may be connected to the electronic device through a network. Examples of the above network include, but are not limited to, the Internet, an intranet, a local area network, a mobile communication network, and combinations thereof.

The electronic device for implementing the method for route planning may further include an input device 703 and an output device 704. The processor 701, the memory 702, the input device 703 and the output device 704 may be connected through a bus or in other manners. In FIG. 7, the connection through the bus is taken as an example.

The input device 703 may receive inputted numeric or character information and generate key signal inputs related to user settings and function control of the electronic device, and may be an input device such as a touch screen, keypad, mouse, trackpad, touchpad, pointing stick, one or more mouse buttons, trackball and joystick. The output device 704 may include a display device, an auxiliary lighting device (e.g., an LED), a haptic feedback device (for example, a vibration motor), etc. The display device may include but not limited to a Liquid Crystal Display (LCD), a Light Emitting Diode (LED) display, and a plasma display. In some embodiments, the display device may be a touch screen.

Various implementations of the systems and techniques described here may be realized in digital electronic circuitry, integrated circuitry, specially designed ASICs (Application Specific Integrated Circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to send data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

According to technical solutions of embodiments of the present disclosure, the method, apparatus, device and computer storage medium according to the present disclosure have the following advantages:

1) In the present disclosure, considerations of state change risks of road segments are integrated into the route planning so that the route is planned by globally considering the state change risks that the user might face upon passing by the road segments, thereby improving the quality of the planned route and the user's experience.

2) In the present disclosure, the state change risk information of the road segments in the road network is predicted with rich traffic flow feature data such as traffic flow statistics data, speed data and times of sudden deceleration of the road segments, with a high prediction accuracy.

3) In the present disclosure, the state change risk coefficients of the road segments can be made fuller and more accurate in a multi-dimensional, multi-factor prediction manner such as the congested state change prediction, accident occurrence prediction, passability prediction, traffic rule change prediction and road quality deterioration prediction.

4) In the present disclosure, the pre-trained congested state predicting model can be used to predict the passage durations on the road segments in the future time slice, thereby determining the congested state changes of the road segments in the future time slice.

5) In the present disclosure, the pre-trained accident predicting model can be used to predict whether an accident occurs on the road segments in the future time slice.

6) In the present disclosure, the current flow features and historical flow features of the road segments can be used to achieve the prediction of whether the road segments are passable.

7) In the present disclosure, the current traffic flow proportion and historical traffic flow proportion from a preceding road segment on the road segment can be used to predict whether a traffic rule change occurs on the road segment.

8) In the present disclosure, the current speed data and times of sudden deceleration and historical speed data and sudden deceleration data of the road segments can be used to achieve the prediction of whether the road quality deterioration occurs on the road segments.

9) In the present disclosure, the state change risks of the road segments can be applied to route lookup in the route planning, or applied to the sorting of the candidate routes, or applied to both the route lookup and the sorting of the candidate routes, so that the route planning result can achieve the minimization of the global risk.

10) In the present disclosure, multiple manners of displaying the route planning results are provided: regarding a route with a minimized global risk, display information indicating that the risk of the route is the lowest to facilitate the use to select the route; regarding a road segment whose state change risk satisfies a preset condition in the route recommended to the user, display the state change risk information predicted for the road segment, so that the user can clearly learn about risks that might exist in the recommended routes, to assist the user in selecting the route, or changing the future travel plan accordingly; regarding a route not recommended to the user due to the state change risk, display causal information why the route is not recommended to the user, so that the user can clearly understand the reason why the route is not displayed, and the user's experience can be improved.

11) If the planned route recommended to the user includes the road segment with the congested state change risk, an interval of the estimated arrival time on the road segment may be displayed so that the user can learn about the time price to be paid if he selects the route, thereby making a correct decision and improving the user's experience.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

The foregoing specific implementations do not constitute a limitation on the protection scope of the present disclosure. It should be understood by those skilled in the art that various modifications, combinations, sub-combinations and substitutions can be made according to design requirements and other factors. Any modification, equivalent replacement and improvement made within the spirit and principle of the present disclosure shall be included in the protection scope of the present disclosure.

**Claims**

1.  A method for route planning, comprising:

    obtaining real-time traffic flow feature data of a road network;
    predicting state change risks of the road segments in the road network with the real-time traffic flow feature data of the road network to obtain state change risk information of the road segments;
    performing route planning with the state change risk information of the road segments.

2.  The method according to claim 1, wherein the traffic flow feature data comprises one of the following:
    traffic flow statistics data, speed data and times of sudden deceleration on the road segments.

3.  The method according to claim 1, wherein the predicting state change risks of the road segments in the road network with the real-time traffic flow feature data of the road network to obtain state change risk information of the road segments comprises:

    performing at least one of congested state change prediction, accident occurrence prediction, passability prediction, traffic rule change prediction and road quality deterioration prediction respectively for the road segments using the real-time traffic flow feature data of the road network, and obtaining risk coefficients corresponding to the predictions respectively according to various prediction results;
    performing a weight process for the risk coefficients corresponding to the predictions obtained for the road segments, to obtain state change risk coefficients of the road segments.

4.  The method according to claim 3, wherein the performing congested state change prediction for the road segments using the real-time traffic flow feature data of the road network comprises:

    inputting the real-time traffic flow feature data of the road network corresponding to a current time slice, road attribute feature data and environment feature data corresponding to a future time slice into a pre-trained congested state predicting model, to obtain a predicted passage duration of each road segment in the road network in the future time slice;
    determining a congested state change of each road segment in the future time slice according to the predicted passage duration of each road segment in the future time slice.

5.  The method according to claim 4, wherein the congested state predicting model is obtained by pre-training in the following manner:

    obtaining training data which includes traffic flow feature data of the road segments in the road network in a first historical time slice, road attribute feature data, environment feature data in a second historical time slice and an average passage duration, wherein the second time slice is a future time slice relative to the first time slice;
    encoding the traffic flow feature data of the road segments in the first historic time slice;
    inputting vector representations obtained from the encoding and a road network link relationship to a Graph Convolutional Network;
concatenating the vector representations output by the Graph Convolutional Network with the road attribute feature data and the environment feature data in the second historical time slice and then input to a fully-connected layer, to obtain a predicted passage duration on the road segment in the second historical time slice; training the Graph Convolutional Network and the fully-connected layer until a training target is achieved, the training target being to minimize a difference between the predicted passage duration on the road segment and an average passage duration on the road segment in the training data.

6. The method according to claim 3, wherein the performing accident occurrence prediction using the real-time traffic flow feature data of the road network comprises:
inputting the real-time traffic flow feature data of the road network corresponding to a current time slice, road attribute feature data and environment feature data corresponding to a future time slice into a pre-trained accident predicting model, to obtain a prediction of whether an accident occurs on the road segment in the road network in the future time slice.

7. The method according to claim 6, wherein the accident predicting model is obtained by pre-training in the following manner:

obtaining training data which includes traffic flow feature data of the road segments in the road network in a first historical time slice, road attribute feature data, environment feature data in a second historical time slice and whether an accident occurs, wherein the second time slice is a future time slice relative to the first time slice; encoding the traffic flow feature data of the road segments in the first historic time slice; inputting vector representations obtained from the encoding and a road network link relationship to a Graph Convolutional Network; inputting the vector representations output by the Graph Convolutional Network, the road attribute feature data and the environment feature data in the second historical time slice into a fully-connected layer, to obtain a prediction of whether an accident occurs on the road segment in the second time slice; training the Graph Convolutional Network and the fully-connected layer until a training target is achieved, the training target being to make a prediction result about whether an accident occurs on the road segments consistent with the training data.

8. The method according to claim 3, wherein the performing passability prediction using the real-time traffic flow feature data of the road network comprises:

obtaining current flow features of the road segments, the flow features including a traffic flow of the road segment, a traffic flow of a preceding road segment and a traffic flow of a following road segment; obtaining historical flow features of the road segments; inputting features obtained after differentiating the current flow features and historical flow features on the same road segment and the road attribute features into a passability predicting model to obtain a prediction of whether the road segment is passable, wherein the passability predicting model is obtained by pre-training based on a classifier.

9. The method according to claim 3, wherein the performing traffic rule change prediction using the real-time traffic flow feature data of the road network comprises:

obtaining a current traffic flow proportion from a preceding road segment on each road segment, and a historical flow proportion from the preceding road segment on each road segment; if the current traffic flow proportion of the road segment falls by a degree beyond a preset proportion threshold as compared with the historical flow proportion, predicting that a traffic rule change exists on the road segment.

10. The method according to claim 3, wherein the performing road quality deterioration prediction for the road segments using the real-time traffic flow feature data of the road network comprises:

obtaining current speed data and times of sudden deceleration of the road segments, and obtaining historical speed data and historical times of sudden deceleration of the road segments; if the current speed data of the road segments obviously falls by a degree beyond a preset speed threshold as compared with the historical speed data, and/or, if the current times of sudden deceleration rise by a degree beyond a preset times threshold as compared with the historical times of sudden deceleration, predicting that road quality deterioration occurs on the road segment.

11. The method according to claim 1, wherein the performing route planning with the state change risk information of the road segments comprises:

updating weights of the road segments using the state change risk information of the road segments, wherein the higher the state change risk is, the larger a degree of reduction of the weights of the road segments is; performing route lookup for the user-input starting position and finishing position based on the updated weights of the road segments, to obtain at least one candidate route; determining a route recommended to the user from the candidate route.

12. The method according to claim 1, wherein the performing route planning with the state change risk information of the road segments comprises:

performing route lookup for the user-input starting position and finishing position, to obtain at least one candidate route; sorting the candidate routes by fusing the state change risk information of the road segments in the candidate routes; determining a route recommended to the user according to a sorting result.

13. The method according to claim 1, wherein the method further comprises: displaying a route planning result in at least one of the following manners:

regarding a route with the lowest sum of state change risk coefficients of the road segments included in the planned route recommended to the user, display information indicating that the risk of the route is the lowest; regarding a road segment whose state change risk satisfies a preset condition in the route recommended to the user, display the state change risk information predicted for the road segment; regarding a route not recommended to the user due to the state change risk, display causal information why the route is not recommended to the user.

14. The method according to claim 4, wherein the method further comprises:

if the planned route recommended to the user includes a road segment with a congested state change risk, determining a second estimated arrival time of the route by using a predicted passage duration of the road segment including the congested state change risk; displaying an interval of the estimated arrival time of the road segment by using a first estimated arrival time determined when the congested state change risk is not considered, and the second estimated arrival time.

15. An apparatus for route planning, comprising:

a data obtaining unit configured to obtain real-time traffic flow feature data of a road network; a risk predicting unit configured to predict state change risks of the road segments in the road network with the real-time traffic flow feature data of the road network to obtain state change risk information of the road segments; a route planning unit configured to perform route planning with the state change risk information of the road segments.

16. The apparatus according to claim 15, wherein the risk predicting unit is specifically configured to:

perform at least one of congested state change prediction, accident occurrence prediction, passability prediction, traffic rule change prediction and road quality deterioration prediction respectively for the road segments using the real-time traffic flow feature data of the road network, and obtain risk coefficients corresponding to the predictions respectively according to various prediction results; perform a weight process for the risk coefficients corresponding to the predictions obtained for the road segments, to obtain state change risk coefficients of the road segments.

17. The apparatus according to claim 15, wherein the risk predicting unit comprises:
a congested state predicting subunit configured to input the real-time traffic flow feature data of the road network corresponding to a current time slice, road attribute feature data and environment feature data corresponding to a future time slice into a pre-trained congested state predicting model, to obtain a predicted passage duration of each road segment in the road network in the future time slice; and determine a congested state change of each road segment in the future time slice according to the predicted passage duration of each road segment in the future time slice.

**18.** The apparatus according to claim 17, wherein the apparatus further comprises:
a congestion model training unit configured to pre-train in the following manner to obtain the congested state predicting model:

> obtain training data which includes traffic flow feature data of the road segments in the road network in a first historical time slice, road attribute feature data, environment feature data in a second historical time slice and an average passage duration, wherein the second time slice is a future time slice relative to the first time slice; encode the traffic flow feature data of the road segments in the first historic time slice; input vector representations obtained from the encoding and a road network link relationship to a Graph Convolutional Network; concatenate the vector representations output by the Graph Convolutional Network with the road attribute feature data and the environment feature data in the second historical time slice and then input to a fully-connected layer, to obtain a predicted passage duration on the road segment in the second historical time slice; train the Graph Convolutional Network and the fully-connected layer until a training target is achieved, the training target being to minimize a difference between the predicted passage duration on the road segment and an average passage duration on the road segment in the training data.

**19.** The apparatus according to claim 15, wherein the risk predicting unit comprises:
an accident occurrence predicting subunit configured to input the real-time traffic flow feature data of the road network corresponding to a current time slice, road attribute feature data and environment feature data corresponding to a future time slice into a pre-trained accident predicting model, to obtain a prediction of whether an accident occurs on the road segment in the road network in the future time slice.

**20.** The apparatus according to claim 19, wherein the apparatus further comprises:
an accident model training unit configured to pre-train in the following manner to obtain the accident predicting model:

> obtain training data which includes traffic flow feature data of the road segments in the road network in a first historical time slice, road attribute feature data, environment feature data in a second historical time slice and whether an accident occurs, wherein the second time slice is a future time slice relative to the first time slice; encode the traffic flow feature data of the road segments in the first historic time slice; input vector representations obtained from the encoding and a road network link relationship to a Graph Convolutional Network; input the vector representations output by the Graph Convolutional Network, the road attribute feature data and the environment feature data in the second historical time slice into a fully-connected layer, to obtain a prediction of whether an accident occurs on the road segment in the second time slice; train the Graph Convolutional Network and the fully-connected layer until a training target is achieved, the training target being to make a prediction result about whether an accident occurs on the road segments consistent with the training data.

**21.** The apparatus according to claim 15, wherein the risk predicting unit comprises:
a passability predicting subunit configured to obtain current flow features of the road segments, the flow features including a traffic flow of the road segment, a traffic flow of a preceding road segment and a traffic flow of a following road segment; obtain historical flow features of the road segments; input features obtained after differentiating the current flow features and historical flow features on the same road segment and the road attribute features into a passability predicting model to obtain a prediction of whether the road segment is passable, wherein the passability predicting model is obtained by pre-training based on a classifier.

**22.** The apparatus according to claim 15, wherein the risk predicting unit comprises:
a traffic rule change predicting subunit configured to obtain a current traffic flow proportion from a preceding road segment on each road segment and a historical flow proportion from the preceding road segment on each road segment; if the current traffic flow proportion of the road segment falls by a degree beyond a preset proportion threshold as compared with the historical flow proportion, predict a traffic rule change exists on the road segment.

**23.** The apparatus according to claim 15, wherein the risk predicting unit comprises:
a road quality predicting subunit configured to obtain current speed data and times of sudden deceleration of the road segments, and obtain historical speed data and historical times of sudden deceleration of the road segments; if the current speed data of the road segments obviously falls by a degree beyond a preset speed threshold as compared with the historical speed data, and/or, if the current times of sudden deceleration rise by a degree beyond a preset times threshold as compared with the historical times of sudden deceleration, predict that road quality deterioration occurs on the road segment.

**24.** The apparatus according to claim 15, wherein the route planning unit is specifically configured to:

update weights of the road segments using the state change risk information of the road segments, wherein the higher the state change risk is, the larger a degree of reduction of the weights of the road segments is; perform route lookup for the user-input starting position and finishing position based on the updated weights of the road segments, to obtain at least one candidate route; determine a route recommended to the user from the candidate route; or,
perform route lookup for the user-input starting position and finishing position to obtain at least one candidate route; sort the candidate routes by fusing the state change risk information of the road segments in the candidate routes; determine a route recommended to the user according to a sorting result.

**25.** The apparatus according to claim 15, wherein the apparatus further comprises:
a displaying unit configured to display a route planning result in at least one of the following manners:

regarding a route with the lowest sum of state change risk coefficients of the road segments included in the planned route recommended to the user, display information indicating that the risk of the route is the lowest;
regarding a road segment whose state change risk satisfies a preset condition in the route recommended to the user, display the state change risk information predicted for the road segment;
regarding a route not recommended to the user due to the state change risk, display causal information why the route is not recommended to the user.

**26.** An electronic device, wherein the electronic device comprises:

at least one processor; and
a memory communicatively connected with the at least one processor; wherein,
the memory stores instructions executable by the at least one processor, and the instructions are executed by the at least one processor to cause the at least one processor to perform the method according to any one of claims 1-14.

**27.** A non-transitory computer-readable storage medium storing computer instructions therein, wherein the computer instructions are used to cause the computer to perform the method according to any one of claims 1-14.

FIG.1

201

Obtain real-time traffic flow feature data of a road network

202

Predict state change risks of road segments in road network with real-time traffic flow feature data of road network to obtain state change risk information of road segments

203

Perform route planning with the state change risk information of the road segments

204

Display a planned route recommended to the user

FIG.2

Historical traffic
flow feature data

↓

Encode

↓

Road network
link
relationship          →          GCN
matrix

↓

⊕          ←          Environment
feature data

Road attribute
feature data

↓

Fully-connected
layer

↓

Predicted
passage duration

FIG.3

Historical traffic
flow feature data

↓

Encode

↓

Road network
link
relationship → GCN
matrix

↓

Environment
feature data

⊕ ←

Road attribute
feature data

↓

Fully-connected
layer

↓

Accident occurrence
probability

FIG.4

FIG.5

FIG.6

701

Processor

703

Input device

Bus

702

Program

Memory

704

Output device

FIG.7

### INTERNATIONAL SEARCH REPORT

| | International application No. |
|---|---|
| | **PCT/CN2020/131304** |

**A. CLASSIFICATION OF SUBJECT MATTER**

G08G 1/01(2006.01)i; G08G 1/0968(2006.01)i

According to International Patent Classification (IPC) or to both national classification and IPC

**B. FIELDS SEARCHED**

Minimum documentation searched (classification system followed by classification symbols)

G08G; G01C; G06Q; G06N; G06F

Documentation searched other than minimum documentation to the extent that such documents are included in the fields searched

Electronic data base consulted during the international search (name of data base and, where practicable, search terms used)

CNPAT, CNKI, EPODOC, WPI: 百度在线, 北京嘀嘀, 路线, 路径, 路况, 规划, 生成, 风险, 预测, 实时, 历史, 时间, 分片, 分段, 第一, 第二, 模型, 差分, 神经网络, 权值, 权重, 卷积, path, route, line, condition, plan, program, generate, risk, prediction, realtime, history, segment, first, second, difference, neural, net, value, weight

**C. DOCUMENTS CONSIDERED TO BE RELEVANT**

| Category* | Citation of document, with indication, where appropriate, of the relevant passages | Relevant to claim No. |
|---|---|---|
| PX | CN 111489553 A (BAIDU ONLINE NETWORK TECHNOLOGY (BEIJING) CO., LTD.) 04 August 2020 (2020-08-04) claims 1-27, description paragraphs [0003]-[0167], figures 1-7 | 1-27 |
| X | CN 110375760 A (BEIJING BAIDU NETCOM SCIENCE AND TECHNOLOGY CO., LTD.) 25 October 2019 (2019-10-25) description, paragraphs [0009]-[0226], and figures 1-7 | 1-27 |
| X | CN 110675621 A (BEIJING DIDI INFINITY TECHNOLOGY AND DEVELOPMENT CO., LTD.) 10 January 2020 (2020-01-10) description, paragraphs [0003]-[0111], and figures 1-9 | 1-27 |
| A | CN 110021161 A (HITACHI, LTD.) 16 July 2019 (2019-07-16) entire document | 1-27 |
| A | CN 107945507 A (TENCENT TECHNOLOGY SHENZHEN CO., LTD.) 20 April 2018 (2018-04-20) entire document | 1-27 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 February 2021** | **24 February 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2020/131304**

### C. DOCUMENTS CONSIDERED TO BE RELEVANT

| Category* | Citation of document, with indication, where appropriate, of the relevant passages | Relevant to claim No. |
|---|---|---|
| A | CN 109919347 A (TENCENT TECHNOLOGY SHENZHEN CO., LTD.) 21 June 2019 (2019-06-21) entire document | 1-27 |
| A | CN 110163405 A (TENCENT DADI TONGTU (BEIJING) TECHNOLOGY CO., LTD. et al.) 23 August 2019 (2019-08-23) entire document | 1-27 |
| A | CN 110400015 A (TENCENT TECHNOLOGY SHENZHEN CO., LTD.) 01 November 2019 (2019-11-01) entire document | 1-27 |
| A | US 2019122544 A1 (MICROSOFT TECHNOLOGY LICENSING, L.L.C.) 25 April 2019 (2019-04-25) entire document | 1-27 |
| A | US 2006158330 A1 (GUEZIEC, Andre) 20 July 2006 (2006-07-20) entire document | 1-27 |

Form PCT/ISA/210 (second sheet) (January 2015)

INTERNATIONAL SEARCH REPORT
Information on patent family members

International application No.

**PCT/CN2020/131304**

| Patent document cited in search report | | | Publication date (day/month/year) | Patent family member(s) | | | Publication date (day/month/year) |
|---|---|---|---|---|---|---|---|
| CN | 111489553 | A | 04 August 2020 | None | | | |
| CN | 110375760 | A | 25 October 2019 | None | | | |
| CN | 110675621 | A | 10 January 2020 | WO | 2020232732 | A1 | 26 November 2020 |
| CN | 110021161 | A | 16 July 2019 | None | | | |
| CN | 107945507 | A | 20 April 2018 | CN | 107945507 | B | 11 August 2020 |
| | | | | WO | 2018068605 | A1 | 19 April 2018 |
| | | | | US | 2019204102 | A1 | 04 July 2019 |
| CN | 109919347 | A | 21 June 2019 | WO | 2019114432 | A1 | 20 June 2019 |
| | | | | US | 2020051428 | A1 | 13 February 2020 |
| CN | 110163405 | A | 23 August 2019 | WO | 2020019901 | A1 | 30 January 2020 |
| | | | | US | 2020393262 | A1 | 17 December 2020 |
| CN | 110400015 | A | 01 November 2019 | None | | | |
| US | 2019122544 | A1 | 25 April 2019 | US | 10783778 | B2 | 22 September 2020 |
| | | | | WO | 2019079129 | A2 | 25 April 2019 |
| US | 2006158330 | A1 | 20 July 2006 | US | 2011169660 | A1 | 14 July 2011 |
| | | | | US | 9070291 | B2 | 30 June 2015 |
| | | | | US | 2016302047 | A1 | 13 October 2016 |
| | | | | US | 8537033 | B2 | 17 September 2013 |
| | | | | US | 9401088 | B2 | 26 July 2016 |
| | | | | US | 2016335893 | A1 | 17 November 2016 |
| | | | | US | 8358222 | B2 | 22 January 2013 |
| | | | | US | 7508321 | B2 | 24 March 2009 |
| | | | | US | 2013033385 | A1 | 07 February 2013 |
| | | | | US | 2007013551 | A1 | 18 January 2007 |
| | | | | US | 2014091950 | A1 | 03 April 2014 |
| | | | | US | 9082303 | B2 | 14 July 2015 |
| | | | | US | 9602977 | B2 | 21 March 2017 |
| | | | | US | 9489842 | B2 | 08 November 2016 |
| | | | | US | 2014088871 | A1 | 27 March 2014 |
| | | | | US | 7375649 | B2 | 20 May 2008 |
| | | | | US | 2013207817 | A1 | 15 August 2013 |
| | | | | US | 7880642 | B2 | 01 February 2011 |
| | | | | US | 7557730 | B2 | 07 July 2009 |
| | | | | US | 2012290204 | A1 | 15 November 2012 |
| | | | | US | 8786464 | B2 | 22 July 2014 |
| | | | | US | 9368029 | B2 | 14 June 2016 |
| | | | | US | 2007038362 | A1 | 15 February 2007 |
| | | | | US | 2014107923 | A1 | 17 April 2014 |
| | | | | US | 2014320315 | A1 | 30 October 2014 |
| | | | | US | 8531312 | B2 | 10 September 2013 |
| | | | | US | 9640073 | B2 | 02 May 2017 |
| | | | | US | 2012290202 | A1 | 15 November 2012 |
| | | | | US | 2015325123 | A1 | 12 November 2015 |
| | | | | US | 2015268055 | A1 | 24 September 2015 |
| | | | | US | 2008109153 | A1 | 08 May 2008 |
| | | | | US | 2015268056 | A1 | 24 September 2015 |
| | | | | US | 7221287 | B2 | 22 May 2007 |
| | | | | US | 8958988 | B2 | 17 February 2015 |
| | | | | US | 2009309758 | A1 | 17 December 2009 |

Form PCT/ISA/210 (patent family annex) (January 2015)

INTERNATIONAL SEARCH REPORT
Information on patent family members

International application No.

**PCT/CN2020/131304**

| Patent document cited in search report | Publication date (day/month/year) | Patent family member(s) | Publication date (day/month/year) |
|---|---|---|---|
| | | US     8564455     B2 | 22 October 2013 |

Form PCT/ISA/210 (patent family annex) (January 2015)

**REFERENCES CITED IN THE DESCRIPTION**

**Patent documents cited in the description**

• CN 2020103386964